# EUROPEAN PATENT APPLICATION

(11) **EP 4 300 358 A1**
(43) Date of publication of application: **03.01.2024**
(21) Application number: 23181868.3
(22) Date of filing: 27.06.2023
(51) Int. Cl.: G06N 3/008, G06N 3/0475, G06N 3/092, G06N 3/094, B60W 30/00

(54) **A SYSTEM FOR CREATING A SOFTWARE ROUTINE FOR VEHICLE MANEUVERS AND A TRAINING METHOD THEREOF**

(30) Priority: 27.06.2022 IN 202241036683
(71) Applicant: Robert Bosch GmbH, 70442 Stuttgart (DE); Bosch Global Software Technologies Private Limited, Karnataka, Bangalore 560095 (IN)
(72) Inventor: Martin, Eric, 74245 Löwenstein (DE)
(74) Representative: Bee, Joachim

(57) **Abstract**

The present disclosure proposes a system (10) for creating a software routine for vehicle maneuvers and a generative adversarial network-based training method thereof. The system (10) comprises an electronic control unit (ECU (102)) in communication with a plurality of vehicle sensors (101), vehicle actuators (104) and at least a pre-trained neural network (103). The pre-trained neural network (103) is trained on dataset comprising multiple vehicle maneuvers in a generative adversarial network framework. The vehicle maneuver data comprises pre-processed values of vehicle operating parameters received from the plurality of vehicle sensors (101).

## Description

### Field of the invention

The present disclosure relates to a system for creating software routine for vehicle maneuvers and training a neural network thereof.

### Background of the invention

The landscape in automotive industry is shifting to a software-driven value chain with the development of paradigms such as autonomous vehicles, connectivity, electrification, and shared mobility. These changing paradigms rely heavily on leading-edge software. OEMs, suppliers, and new players across the industry hope to capture these critical control points in this new. The complexity of automotive software is growing on both the functional and architectural levels posing a challenge to development productivity. Increased efforts are therefore required for software development and maintenance over life-cycles. There is a need for automation to write software code in the case of a software which needs to react based on a given inputs. The invention proposes to write such software code faster and make the software more robust using the benefits of the Artificial Intelligence and deep learning Technology.

Generative Adversarial Networks (GANs) is a class of generative deep learning frameworks, inspired by game theory and invented in 2014. The framework consists of two neural networks - generator G and discriminator D, involved in a two-player minimax game, such that the generator attempts at creating naturalistic data to deceive the discriminator, while D attempts to separate the fake data (generated by G) from the real ones. Based on the outcome, the generator tries to generate samples which are similar to the original distribution. This method of pitting models against one another is known as adversarial training. It holds that improvements in one component come at the expense of the other ultimately enabling GANs to artificially create high-dimensional new data that appear to be realistic in nature. A trained discriminator can detect irregularities, outliers, aberration and anything out of the ordinary while once a generator can understand the distribution of the sample data, it can create anything related to the data.

Patent Application WO21240528A1 titled "Generating simulated edge-case driving scenarios" discloses a system for generating simulated driving scenarios, comprising at least one hardware processor adapted for generating a plurality of simulated driving scenarios, each generated by providing a plurality of input driving objects to a machine learning model, where the machine learning model is trained using another machine learning model, trained to compute a classification indicative of a likelihood that a simulated driving scenario produced by the machine learning model comprises an interesting driving scenario.

### Brief description of the accompanying drawings

An embodiment of the invention is described with reference to the following accompanying drawings:
Figure 1 depicts a system (10) for creating a software routine for vehicle maneuvers;
Figure 2 depicts a framework for training a neural network (D (103)) adapted to create software routine for vehicle maneuvers;
Figure 3 illustrates method steps (300) for training a neural (D (103)) network adapted to create software routine for vehicle maneuvers.

### Detailed description of the drawings

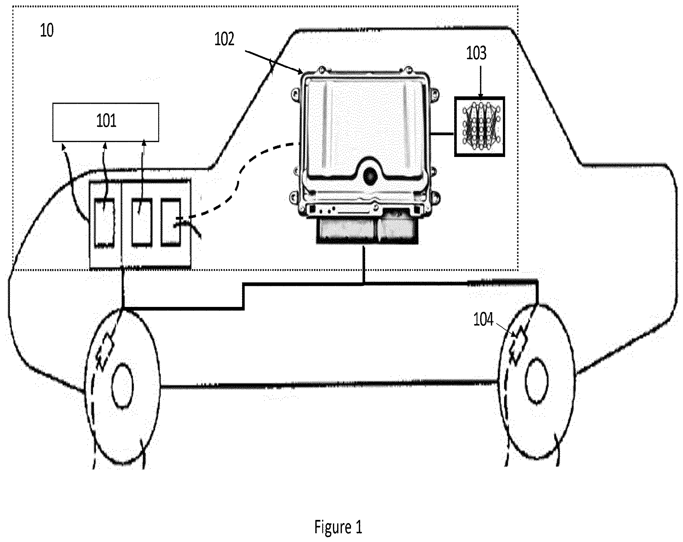

Figure 1 depicts a system (10) for creating a software routine for vehicle maneuvers. A vehicle maneuver is a combination between boundary conditions (e.g. temperature, voltage) and driver input (e.g. pedal force profile, pedal stroke profile, pedal speed profile).The system (10) comprises an electronic control unit (ECU (102)) in communication with a plurality of vehicle sensors (101) and actuators (104). The system (10) can be deployed in a simulation environment (105) for testing and calibration of the vehicle or even real-time in a vehicle.

The plurality of vehicle sensors (101) includes but are not limited to wheel speed sensor, inertial sensor, engine management sensor, steering angle sensor, pedal position sensor, throttle position sensor, yaw rate sensor and the like. The plurality of vehicle sensors (101) measure parameters commonly known to a person skilled in the art such as but not limited to Wheel Speeds, Wheel accelerations, Wheel slips, Wheel jerks, Lateral Acceleration, Brake Information, Actual engine Torque, Wheel torque, Steering Value, Driver Pedal Request, Throttle position, Driver Request, Yaw rate factor, ABS (Anti-lock braking system (10)) activation. The plurality of actuators (104) are the various pneumatic, hydraulic, electromagnetic, mechanical or electric components of the vehicle responsible for moving and controlling a mechanism in the vehicle. For example, the hydraulic circuit of a braking unit comprises a plurality of valves that are actuated (opened or closed ) for regulation of brake fluid and thereby the braking force.

The ECU (102) is a logic circuitry or a hardware processor that may be implemented in the system (10) as one or more microprocessors, microcomputers, microcontrollers, digital signal processors, central processing units, state machines, logic circuitries, firmware, an application specific integrated circuit (ASIC), and/or a field programmable gate array (FPGA) and/or any component that operates on signals based on operational instructions. The ECU (102) is configured to receive a vehicle maneuver data comprising values of parameters measured by the plurality of vehicle sensors. The vehicle maneuver data comprises pre-processed values of vehicle operating parameters received from the plurality of vehicle sensors (101). It communicates this vehicle maneuver data with a pre-trained neural network (103).

Neural Networks are computing systems inspired by the biological neural networks that constitute animal brains. The neural network can be a software residing in the system or the cloud or embodied within an electronic chip. Such neural network chips are specialized silicon chips, which incorporate (artificial intelligence) AI technology and are used for machine learning. The pre-trained neural network (103) configured to: process the vehicle maneuver data and create a software routine; communicate the created software routine with the ECU (102) to trigger the plurality of actuators (104). The pre-trained neural network (103) is trained on dataset comprising multiple vehicle maneuvers in a generative adversarial network framework. The method of training the neural network are described in detail in accordance with method steps (300).

A software routine in context of a vehicle refers a function within one product running on the ECU (102). It takes input signals from the plurality of vehicle sensors (101) or other control units inside the vehicle and outputs another signal which is then processed by other functions or used as a target to the vehicle actuators. As example we can take the function that sets the motor target for a brake booster. When the brake pedal is actuated by the driver, the pedal stroke is measured and passed as an input signal to the ECU. A function turns the pedal stroke into a motor target which then amplifies the brake force. The path between the input signal of the ECU to the motor target which is then sent to the actuator is the software routine.

It should be understood at the outset that, although exemplary embodiments are illustrated in the figures and described below, the present disclosure should in no way be limited to the exemplary implementations and techniques illustrated in the drawings and described below.

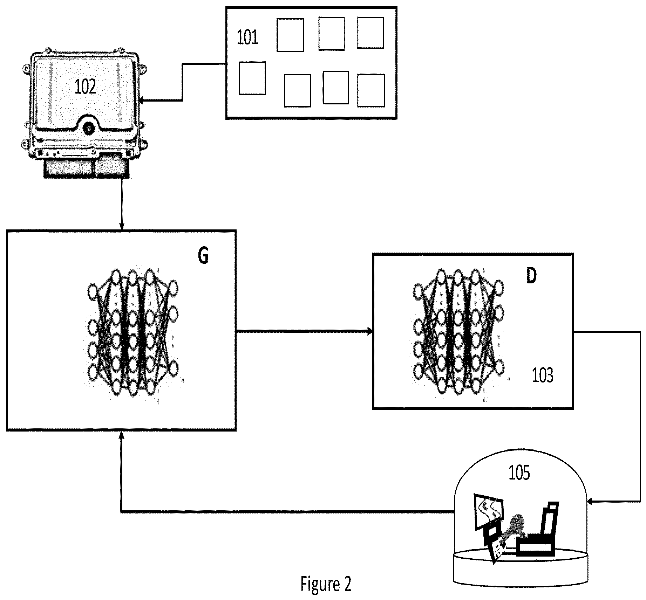

Figure 2 depicts a framework for training a neural network (103) adapted to create software routine for vehicle maneuvers. The framework takes an initialization input dataset from the ECU (102). The initialization dataset comprises a first vehicle maneuver data gathered from the plurality of vehicle sensors (101) and thereafter preprocessed by the ECU. The plurality of vehicle sensors (101) measure the value of vehicle operating parameters for a particular driving maneuver which is used as input dataset to train the neural network (103). Both the ECU (103) and the plurality of vehicle sensors (101) have been described in detail in accordance with figure 1.

Here in the framework the neural network (103) to be trained acts as a discriminator (D) in a generative adversarial network. The neural network (103) (discriminator (D)) is trained to create a software routine. A software routine is the bunch of ECU signals that trigger an ideal reaction in the actuators of the vehicle in response to the values of parameters (vehicle maneuver data) received from the plurality of vehicle sensors (101). The output of the generated software routine is implemented in simulation environment (105) in the framework for training the neural network (103).

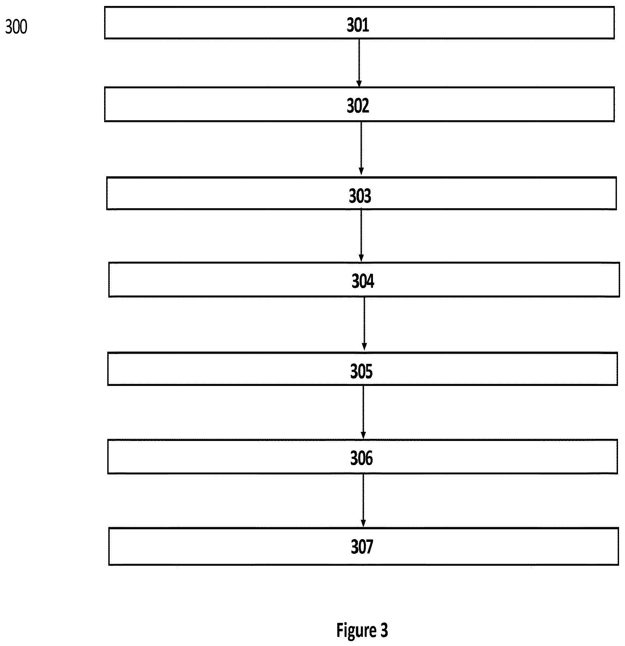

Figure 3 illustrates method steps for training a neural network (103) adapted to create software routine for vehicle maneuvers. The framework for training the neural network (103) has been elucidated in accordance with figure 2. It is reiterated that the said method uses a generative adversarial network (GAN) framework, the GAN framework comprising a generator (G) and a discriminator (D), wherein the neural network (103) acts as the discriminator (D).

Method step 301 comprises feeding a first vehicle maneuver data to the generator (G), said vehicle maneuver data comprising values of parameters measured by the plurality of vehicle sensors, which is pre-processed by the ECU (102). The plurality of vehicle sensors (101) such as the wheel speed sensor, inertial sensor, engine management sensor, steering angle sensor, pedal position sensor, throttle position sensor, yaw rate sensor and the like measure various vehicle operating parameters. In an exemplary embodiment of the present disclosure these parameters could be but not limited to the following : Wheel Speeds, Wheel accelerations, Wheel slips, Wheel jerks, Lateral Acceleration, Brake Information, Actual engine Torque, Wheel torque, Steering Value, Driver Pedal Request, Throttle position, Driver Request, Yaw rate factor, ABS (Anti-lock braking system (10)) activation.

Method step 302 comprises executing the generator (G) to create a secondary vehicle maneuver data. The generator (G) processes these parameters to create a secondary vehicle maneuver data on the initialization input i.e. the first vehicle maneuver data comprising pre-processed values of the values of parameters measured by the plurality of sensors (101). The secondary vehicle maneuver data are hence artificially generated pre-processed values of the plurality of vehicle operating parameters.

Method step 303 comprises inputting the output of the generator (G) to the discriminator (D). The secondary vehicle maneuver data is given as input to the discriminator (D).

Method step 304 comprises executing the discriminator (D) to generate a software routine for the secondary vehicle maneuver data. Method step 305 comprises implementing (305) the software routine in a simulation environment (105). The implementation of the software routine in a simulation environment (105) involves triggering of the plurality of actuators in the simulation environment (105).

Method step 306 comprises computing a reward for the generator (G) and the discriminator (D) respectively based on said implementation. The reward is computed based on the targets of the generator and the discriminator. For example, lets assume the software routine corresponds to signals for braking distance. The braking distance is sought to minimized by the discriminator (D) through the created software routine whereas the generator (G) seeks to maximize the braking distance through tricky secondary vehicle maneuvers which are not comprehended well by the discriminator (D). If the generator (G) is able maximize the braking distance reward for the generator (G) is high and it is correspondingly low for the discriminator (D).

Method step 307 comprises providing a feedback to the generator (G) and the discriminator based on the reward. The core of the idea is that the two adversarial neural networks are pitted against each other with opposite targets. This pushes the training of the discriminator to new boundaries and increase the robustness for the created software routines. The weights of both neural networks are updated based on the feedback. The methods steps are iteratively repeated until the reward for the neural network (103) / discriminator (D) corresponds to a pre-defined threshold.

With this process, the idea is to tune the maneuvers in order to find the maneuver which is the most critical. The software routine learns how to deal with it. This forces the software routine to improve the robustness. Also, the function learnt by the software routine is designed with a neural network and consequently it can be much more complicated and sophisticated than what a human could design.

A person skilled in the art will appreciate that while these method steps describes only a series of steps to accomplish the objectives, these methodologies may be implemented in system (10) with modifications and adaptation according to the requirement.

This idea to develop the system (10) for creating a software routine for vehicle maneuvers and a generative adversarial network-based training method (300) thereof not only improves software development speed but also the robustness because the vehicle maneuvers and the corresponding software routine created by the neural network are more challenging that the ones a human being would generate at testing time.

It must be understood that the embodiments explained in the above detailed description are only illustrative and do not limit the scope of this invention. Any modification and adaptation to the system (10) for creating a software routine for vehicle maneuvers and a training method (300) thereof are envisaged and form a part of this invention. The scope of this invention is limited only by the claims.

## Claims

1. A method (300) of training a neural network (103) adapted to create software routine for vehicle maneuvers, said method using a generative adversarial network (GAN) framework, the GAN framework comprising a generator (G) and a discriminator (D), wherein the neural network (103) acts as the discriminator (D), the method comprising:
feeding (301) a first vehicle maneuver data to the generator (G), vehicle maneuver data comprising values of parameters measured by a plurality of vehicle sensors (101);
executing (302) the generator (G) to create secondary vehicle maneuver data;
inputting (303) the output of the generator (G) to the discriminator (D);
executing (304) the discriminator (D) to generate a software routine for the secondary vehicle maneuver data;
implementing (305) the software routine in a simulation environment (105) ;
computing (306) a reward for the generator (G) and the discriminator (D) respectively based on said implementation;
providing (307) a feedback to the generator (G) and the discriminator (D) based on the reward.

2. The method (300) of training a neural network (103) adapted to create software routine for vehicle maneuvers as claimed in claim 1, the vehicle maneuver data comprises pre-processed values of vehicle operating parameters received from the plurality of vehicle sensors (101).

3. The method (300) of training a neural network (103) adapted to create software routine for vehicle maneuvers as claimed in claim 1, wherein the methods steps are iteratively repeated until the reward for the discriminator (D) corresponds to a pre-defined threshold.

4. A system (10) for creating software routine for vehicle maneuvers, the system (10) comprising an electronic control unit (ECU (102)) in communication with a plurality of vehicle sensors and actuators, **characterized in that** system (10):
the ECU (102) configured to receive a vehicle maneuver data comprising values of parameters measured by the plurality of vehicle sensors;
a pre-trained neural network (103) in communication with the ECU (102), the pre-trained neural network (103) configured to :
process the vehicle maneuver data and create a software routine;
communicate the created software routine with the ECU (102) to trigger the plurality of actuators (104).

5. The system (10) for creating software routine for vehicle maneuvers as claimed in claim 4, wherein the pre-trained neural network (103) (103) is trained on dataset comprising multiple vehicle maneuvers in a generative adversarial network framework.
